# EUROPEAN PATENT APPLICATION

(11) **EP 4 683 179 A1**
(43) Date of publication of application: **21.01.2026**
(21) Application number: 25188957.2
(22) Date of filing: 11.07.2025
(51) Int. Cl.: H02K 3/24, H02K 9/197, H02K 5/16

(54) **FLOW GUIDE FOR ELECTRIC MOTOR, ELECTRIC MOTOR, ELECTRIC DRIVE ASSEMBLY SYSTEM AND VEHICLE**

(30) Priority: 18.07.2024 CN 202410968591
(71) Applicant: Valeo eAutomotive Germany GmbH, 91056 Erlangen (DE)
(72) Inventor: WANG, Avan-Shengjian, 91056 Erlangen (DE); YING, Renlong, 91056 Erlangen (DE)
(74) Representative: Valeo Powertrain Systems

(57) **Abstract**

The present disclosure relates to a flow guide for an electric motor, the electric motor comprising a stator, the stator comprising a stator main body and at least one end winding (4), and the stator main body has an end face in an axial direction of the electric motor, and the end winding (4) is formed on the end face of the stator main body, and the flow guide comprising a first flow-guiding ring body (1), a second flow-guiding ring body (2), and an annular flow-guiding part (3) that connects the first flow-guiding ring body (1) to the second flow-guiding ring body (2); the flow guide is a semi-closed structure and is used for at least partially surrounding the end winding (4).

## Description

### TECHNICAL FIELD

The present disclosure relates to a flow guide for an electric motor. In particular, the flow guide according to the present disclosure, not only cools an outer surface of an electric motor winding but also cools an inner surface of the electric motor winding because of the shape and structure thereof. The present disclosure further relates to an electric motor comprising such a flow guide, an electric drive assembly system and a vehicle.

### BACKGROUND

The power range and service life of an electric motor are particularly determined by the temperatures that components reach during operation, in particular the temperatures of electronic elements, power elements, a storage system and drive elements of the electric motor. For example, for devices with a higher heat load, apart from efficient rotor cooling and full stator cooling, cooling of an end winding of an electric motor is also very important.

For end winding cooling, generally a flow guide is arranged at both ends of the stator, and coolant is sprayed on the windings through flow-guiding holes on the flow guides, thereby cooling the windings. However, a drawback of such a design is that coolant is splashed everywhere and flows away through gaps in the end windings of the electric motor, such that the end windings of the electric motor cannot be fully cooled, and the cooling efficiency is lower.

Thus, there is an urgent need for a new type of flow guide for an electric motor, which is able to avoid coolant splashing everywhere, so as to fully cool an end winding.

### SUMMARY OF THE INVENTION

Thus, the present disclosure is intended to solve the abovementioned problem, having the objective of providing a new type of flow guide for an electric motor, an electric motor, an electric drive assembly system and a vehicle.

The object is achieved by using a flow guide for an electric motor provided by an embodiment according to the present disclosure; the electric motor comprises a stator, the stator comprising a stator main body and at least one end winding, the stator main body having an end face in an axial direction of the electric motor, the end winding being formed on the end face of the stator main body, and the flow guide comprising a first flow-guiding ring body, a second flow-guiding ring body, and an annular flow-guiding part that connects the first flow-guiding ring body to the second flow-guiding ring body; the flow guide is a semi-closed structure and is used for at least partially surrounding the end winding, the first flow-guiding ring body is located at a radial outer side of the second flow-guiding ring body and surrounds the second flow-guiding ring body, the first flow-guiding ring body is provided with several flow-guiding holes arranged on a circumferential annular face thereof, and at least one opening is provided on the annular flow-guiding part.

One of the objects of the present disclosure lies in providing a flow guide for an electric motor, which is able to avoid coolant splashing everywhere, such that the coolant fully cools an end winding of the electric motor, increasing the cooling efficiency.

The flow guide according to the present disclosure may also have one or more of the following features individually or in combination.

According to an embodiment of the present disclosure, a cavity that at least partially surrounds the end winding is formed between the first flow-guiding ring body, the second flow-guiding ring body and the annular flow-guiding part.

According to an embodiment of the present disclosure, the first flow-guiding ring body is located at a radial outer side of the end winding, the second flow-guiding ring body is located at a radial inner side of the end winding, and the annular flow-guiding part is opposite the end face of the stator main body of the electric motor.

According to an embodiment of the present disclosure, the first flow-guiding ring body comprises a baffle plate that extends circumferentially, and the baffle plate is integrally formed with the first flow-guiding ring body.

According to an embodiment of the present disclosure, in the axial direction of the electric motor, the baffle plate is remote from the stator main body of the electric motor relative to the flow-guiding holes.

According to an embodiment of the present disclosure, one side of the baffle plate that is near the annular flow-guiding part is provided with a slot that extends circumferentially.

According to an embodiment of the present disclosure, a circumferential edge of the first flow-guiding ring body that is remote from the annular flow-guiding part is provided with a slot.

According to an embodiment of the present disclosure, one or more protrusions are provided along the circumferential annular face of the first flow-guiding ring body, the protrusion extending radially away from the second flow-guiding ring body, and the protrusion being arranged at an interval from the flow-guiding holes in the circumferential direction.

According to an embodiment of the present disclosure, the flow guide is integrally formed.

According to an embodiment of the present disclosure, the first flow-guiding ring body, the second flow-guiding ring body and the annular flow-guiding part may be secured together by thermal welding or ultrasonic welding.

According to an embodiment of the present disclosure, the first flow-guiding ring body, the second flow-guiding ring body and the annular flow-guiding part are made of a thermoplastic.

According to an embodiment of the present disclosure, the flow guide is engaged and mated with an outer shell of the electric motor.

The present disclosure further relates to an electric motor comprising the flow guide as described above.

The present disclosure further relates to an electrically driven assembly system comprising an electric motor as described above.

The present disclosure further relates to a vehicle comprising the electrically driven assembly system as described above.

### BRIEF DESCRIPTION OF THE DRAWINGS

The foregoing and other features and advantages of the present disclosure will become more apparent from the following detailed description of exemplary embodiments with reference to the accompanying drawings, and the description and the accompanying drawings are for illustrative purposes only and are not intended to limit the scope of the present disclosure in any way. The drawings below are not drawn to scale according to actual dimensions but rather focus on showing the main purpose of the present disclosure.
Fig. 1 shows a structural schematic drawing of a flow guide provided by at least one embodiment of the present disclosure in one direction;
Fig. 2 shows a structural schematic drawing of a flow guide provided by at least one embodiment of the present disclosure in another direction;
Fig. 3 shows a sectional schematic drawing of an electric motor with a flow guide provided by at least one embodiment of the present disclosure;
Fig. 4 shows a detailed view of the area labelled B in Fig. 3.

### DETAILED DESCRIPTION

To clarify the objective, technical solutions and advantages of embodiments of the present disclosure, the technical solutions of the embodiments of the present disclosure are described clearly and completely below in conjunction with the drawings of the embodiments of the present disclosure. Obviously, the described embodiments are some rather than all of the embodiments of the present disclosure.

Unless defined otherwise, the technical or scientific terms used herein shall have the common meanings as understood by those of ordinary skill in the field to which the present disclosure belongs. Words such as "one", "a" or "the" used in the description and the claims of the patent application disclosed herein do not indicate a quantity limit, but mean that there is at least one. Words such as "comprise" or "include" mean that the element or object appearing before the word encompasses the elements or objects and their equivalents listed after the word, without excluding other elements or objects. Words such as "first" and "second" used in the description and claims of the patent application disclosed herein do not denote any order, quantity or importance, and are merely used to distinguish different component parts. The terms "upper", "lower", "left", "right" and the like are only used to indicate a relative positional relationship, and when the absolute position of a described object changes, the relative positional relationship may also change accordingly.

Embodiments according to the present disclosure are described in detail with reference to the drawings. It must be noted here that in the drawings, identical reference numerals are assigned to component parts having substantially the same or similar structures and functions, and repeated descriptions of such component parts are omitted.

Generally, an electric motor comprises a stator and a cooling apparatus, the stator having a first end face and a second end face in an axial direction of the electric motor; a flow guide is arranged at the first end face and the second end face of the stator, and the flow guides surround end windings at both ends of the stator. The flow guide is an annular structure, and is provided with flow-guiding holes for example. When the electric motor is running, the flow guides constantly rotate, while a cooling medium (such as oil) is constantly sprayed out of the flow-guiding holes and applied to the end windings at the first end face and the second end face of the stator.

However, the cooling medium splashes everywhere from the flow-guiding holes; when applied to the end windings at the first end face and the second end face, the cooling medium quickly flows away through gaps in the end windings, such that the end windings of the electric motor cannot be fully cooled, and the cooling efficiency is lower.

Embodiments of the present disclosure provide a flow guide for an electric motor. The electric motor comprises a stator, the stator comprising a stator main body and at least one end winding, the stator main body having an end face in an axial direction of the electric motor, the end winding being formed on the end face of the stator main body, and the flow guide comprising a first flow-guiding ring body, a second flow-guiding ring body, and an annular flow-guiding part that connects the first flow-guiding ring body to the second flow-guiding ring body; the flow guide is a semi-closed structure and is used for at least partially surrounding the end winding, the first flow-guiding ring body is located at a radial outer side of the second flow-guiding ring body and surrounds the second flow-guiding ring body, the first flow-guiding ring body is provided with several flow-guiding holes arranged on a circumferential annular face thereof, and at least one opening is provided on the annular flow-guiding part.

This flow guide is able to avoid coolant splashing everywhere, which is advantageous for fully cooling an end winding.

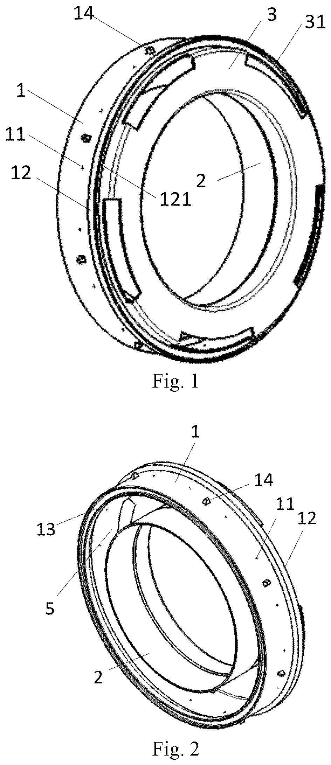

Fig. 1 shows a structural schematic drawing of a flow guide provided by at least one embodiment of the present disclosure in one direction.

As shown in Fig. 1, the flow guide comprises a first flow-guiding ring body 1, a second flow-guiding ring body 2, and an annular flow-guiding part 3 that connects the first flow-guiding ring body 1 to the second flow-guiding ring body 2. The first flow-guiding ring body 1 is located at a radial outer side of the second flow-guiding ring body 2 and surrounds the second flow-guiding ring body 2. The first flow-guiding ring body 1 is provided with several flow-guiding holes 11 arranged on a circumferential annular face thereof; the function of these flow-guiding holes 11 is to apply coolant (such as oil) to the end winding (not shown in Fig. 1) of the stator of the electric motor to cool the end winding. The first flow-guiding ring body 1 comprises a baffle plate 12 that is configured circumferentially, and, for example, the baffle plate 12 is integrally formed with the first flow-guiding ring body 1. The function of the baffle plate 12 is to control the direction of flow of coolant; in this embodiment, the baffle plate 12 is used for obstructing coolant, such that, to the greatest extent possible, the coolant sprays onto the end winding through the flow-guiding holes 11.

As shown in Fig. 1, at least one opening 31 is provided on the annular flow-guiding part 3; it must be explained that the present disclosure imposes no restriction on the quantity and shape of the openings 31. The function of the opening 31 is to discharge coolant for cooling the end winding, and then the coolant is collected by an oil collector for subsequent use.

As shown in Fig. 1, one side of the baffle plate 12 that is near the annular flow-guiding part 3 is provided with a slot 121 that extends circumferentially. The slot 121 is used for accommodating a sealing ring. The sealing ring is an O-ring for example.

As shown in Fig. 1, one or more protrusions 14 are provided along the circumferential annular face of the first flow-guiding ring body 1. The protrusion 14 extends radially away from the second flow-guiding ring body 2, and the protrusion 14 is arranged at an interval from the flow-guiding holes 11 in the circumferential direction.

Fig. 2 shows a structural schematic drawing of a flow guide provided by at least one embodiment of the present disclosure in another direction.

As shown in Fig. 2, it can be seen that the flow guide provided by the present disclosure is a semi-closed structure, and a cavity 5 that at least partially surrounds the end winding of the electric motor is formed between the first flow-guiding ring body 1, the second flow-guiding ring body 2 and the annular flow-guiding part 3.

As shown in Fig. 2, a circumferential edge of the first flow-guiding ring body 1 that is remote from the annular flow-guiding part 3 is provided with a slot 13. The slot 13 is used for accommodating a sealing ring. The sealing ring is an O-ring for example.

The flow guide provided by the present disclosure may be integrally formed entirely using one mould, or may be formed be splicing multiple components.

For example, the first flow-guiding ring body 1 and the annular flow-guiding part 3 are integrally formed using one mould, and the second flow-guiding ring body 2 is made using another mould; as a further example, the first flow-guiding ring body 1 is made using one mould, and the second flow-guiding ring body 2 and the annular flow-guiding part 3 are formed using another mould. As another example, the first flow-guiding ring body 1, the second flow-guiding ring body 2 and the annular flow-guiding part 3 are respectively made using different moulds.

For example, in an embodiment of the present disclosure, the first flow-guiding ring body 1, the second flow-guiding ring body 2 and the annular flow-guiding part 3 may be secured together by thermal welding or ultrasonic welding.

For example, in an embodiment of the present disclosure, the first flow-guiding ring body 1, the second flow-guiding ring body 2 and the annular flow-guiding part 3 are made of a thermoplastic. It should be explained that the present disclosure imposes no restrictions on the material for manufacturing the flow guide.

According to another aspect of the present disclosure, an electric motor is proposed, comprising the flow guide as described above. It should be understood that the electric motor of the present disclosure also has the advantages described above in relation to the flow guide.

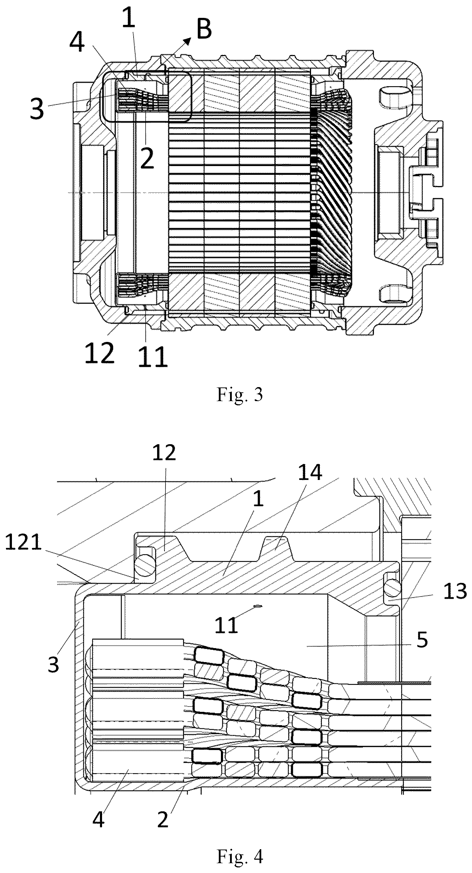

Fig. 3 shows a sectional schematic drawing of an electric motor with a flow guide provided by at least one embodiment of the present disclosure.

As shown in Fig. 3, the electric motor comprises a stator and the flow guide, the stator comprising a stator main body and at least one end winding 4. The stator main body has an end face in an axial direction of the electric motor, and the end winding 4 is formed on the end face of the stator main body. The flow guide is a semi-closed structure, and the flow guide at least partially surrounds the end winding 4 of the electric motor. The first flow-guiding ring body 1 is located at a radial outer side of the end winding 4, the second flow-guiding ring body 2 is located at a radial inner side of the end winding, and the annular flow-guiding part 3 is opposite the end face of the stator main body of the electric motor. In the axial direction of the electric motor, the baffle plate 12 of the first flow-guiding ring body 1 is remote from the stator main body of the electric motor relative to the flow-guiding holes 11.

Fig. 4 shows a detailed view of the area labelled B in Fig. 3.

As shown in Fig. 4, the end winding 4 of the stator of the electric motor is accommodated in the cavity 5 formed by the flow guide of the present disclosure. The flow guide is engaged and mated with an outer shell of the electric motor. Specifically, the protrusion 14 on the flow guide fits with an inner wall of the outer shell of the electric motor, which not only supports the outer shell but also realizes a radially positioning function. Sealing rings that are embedded in the slot 13 and the slot 121 are axially compressed and respectively abut the inner wall of the outer shell of the electric motor and the stator main body, not only realizing a positioning function but also a sealing function. A face that corresponds to an outer diameter of an oil guide ring fits with an inner wall of the outer shell of the electric motor, realizing a centring function.

The function of the flow guide provided by the present disclosure is specifically explained below with reference to Figs. 1 to 4.

Coolant for cooling the electric motor flows along a flow channel of the stator main body toward both ends of the stator main body; firstly, coolant flows to a surface of the first flow-guiding ring body 1 of the flow guide, the baffle plate 12 of the first flow-guiding ring body 1 stops the coolant from flowing out, and the coolant is applied to end windings 4 at both ends of the stator of the electric motor through the flow-guiding holes 11 arranged on the first flow-guiding ring body 1. The second flow-guiding ring body 2 of the flow guide prevents the coolant from flowing away through gaps in the end winding 4, such that the coolant can permeate the end winding 4 as much as possible, such that the end winding 4 can be fully cooled, thus increasing the cooling efficiency. Finally, the coolant flows out from the opening 31 of the annular flow-guiding part 3 of the flow guide.

It must be explained that the direction "axial" is understood to refer to a direction along or parallel to the axis of rotation of the electric motor in the present disclosure. The direction "radial" is understood to refer to a direction perpendicular to the axis of rotation of the electric motor.

According to another aspect of the present disclosure, an electric drive assembly system is proposed, comprising the electric motor as described above. It should be understood that the electric drive assembly system of the present disclosure also has the advantages described above in relation to the flow guide.

According to another aspect of the present disclosure, a vehicle is provided, comprising the electric drive assembly system as described above. The vehicle may be an electrified vehicle, such as a battery electric vehicle (BEV), a hybrid electric vehicle (HEV), a plug-in hybrid electric vehicle (PHEV), a range extended EV or a fuel cell electric vehicle (FCEV). The vehicle may also be a hydrogen-powered vehicle. It should be understood that the vehicle of the present disclosure also has the advantages described above in relation to the flow guide.

Certain features, structures or characteristics in one or more embodiments of the present disclosure may be combined appropriately.

The above is a description of the present disclosure and should not be regarded as limiting it. Although some exemplary embodiments of the present disclosure have been described, those skilled in the art will readily understand that many modifications could be made to the exemplary embodiments without departing from the original teaching and advantages of the present disclosure. Therefore, all such modifications are intended to be included in the scope of the present disclosure as defined by the claims. It should be understood that the above is a description of the present disclosure; the present disclosure should not be considered to be limited to the specific embodiments disclosed, and modifications to the disclosed embodiments and other embodiments are intended to be included within the scope of the present disclosure.

## Claims

1. A flow guide for an electric motor, **characterized in that** the electric motor comprises a stator, and the stator comprises a stator main body and at least one end winding (4), and the stator main body has an end face in an axial direction of the electric motor, and the end winding (4) is formed on the end face of the stator main body,
wherein the flow guide comprises a first flow-guiding ring body (1), a second flow-guiding ring body (2), and an annular flow-guiding part (3) that connects the first flow-guiding ring body (1) to the second flow-guiding ring body (2),
wherein the flow guide is a semi-closed structure and is used for at least partially surrounding the end winding (4), and the first flow-guiding ring body (1) is located at a radial outer side of the second flow-guiding ring body (2) and surrounds the second flow-guiding ring body (2), and the first flow-guiding ring body (1) is provided with several flow-guiding holes (11) arranged on a circumferential annular face thereof, and at least one opening (31) is provided on the annular flow-guiding part (3).

2. The flow guide according to Claim 1, **characterized in that** a cavity (5) that at least partially surrounds the end winding (4) is formed between the first flow-guiding ring body (1), the second flow-guiding ring body (2) and the annular flow-guiding part (3).

3. The flow guide according to Claim 2, **characterized in that** the first flow-guiding ring body (1) is located at a radial outer side of the end winding (4), the second flow-guiding ring body (2) is located at a radial inner side of the end winding (4), and the annular flow-guiding part (3) is opposite to the end face of the stator main body of the electric motor.

4. The flow guide according to Claim 1, **characterized in that** the first flow-guiding ring body (1) comprises a baffle plate (12) that extends circumferentially, and the baffle plate (12) is integrally formed with the first flow-guiding ring body (1).

5. The flow guide according to Claim 4, **characterized in that**, in the axial direction of the electric motor, the baffle plate (12) is remote from the stator main body of the electric motor relative to the flow-guiding holes (11).

6. The flow guide according to Claim 4, **characterized in that** one side of the baffle plate (12) that is near the annular flow-guiding part (3) is provided with a slot (121) that extends circumferentially.

7. The flow guide according to Claim 1, **characterized in that** a circumferential edge of the first flow-guiding ring body (1) that is remote from the annular flow-guiding part (3) is provided with a slot (13).

8. The flow guide according to Claim 1, **characterized in that** one or more protrusions (14) are provided along the circumferential annular face of the first flow-guiding ring body (1), and the protrusion (14) extends radially away from the second flow-guiding ring body (2), and the protrusion (14) being arranged at an interval from the flow-guiding holes (11) in the circumferential direction.

9. The flow guide according to any one of Claims 1 to 8, **characterized in that** the flow guide is integrally formed.

10. The flow guide according to any one of Claims 1 to 8, **characterized in that** the first flow-guiding ring body (1), the second flow-guiding ring body (2) and the annular flow-guiding part (3) are secured together by thermal welding or ultrasonic welding.

11. The flow guide according to any one of Claims 1 to 8, **characterized in that** the first flow-guiding ring body (1), the second flow-guiding ring body (2) and the annular flow-guiding part (3) are made of a thermoplastic.

12. The flow guide according to Claim 1, **characterized in that** the flow guide is engaged and mated with an outer shell of the electric motor.

13. An electric motor, **characterized in that** the electric motor comprises the flow guide according to any one of Claims 1 to 12.

14. An electric drive assembly system, **characterized in that** the electric drive assembly system comprises the electric motor according to Claim 13.

15. A vehicle, **characterized in that** the vehicle comprises the electric drive assembly system according to Claim 14.
